# EUROPÄISCHE PATENTANMELDUNG

(11) **EP 4 815 440 A1**
(43) Veröffentlichungstag der Anmeldung: **30.09.2026**
(21) Anmeldenummer: 25166329.0
(22) Anmeldetag: 26.03.2025
(51) Int. Cl.: H04N 17/00, H04N 23/745

(54) **VERFAHREN ZUR KAMERASIMULATION UND KAMERASIMULATOR**

(71) Anmelder: dSPACE SE & Co. KG, 33102 Paderborn (DE)
(72) Erfinder: Tscherkassow, Ilja, 33102 Paderborn (DE); Brodehl, Christoph, 33102 Paderborn (DE)

(57) **Zusammenfassung**

Die Anmeldung betrifft ein Verfahren zur Kamerasimulation, welches synthetischen Bilddaten (16) generiert, welche eine flackernde Lichtquelle wiedergeben, wobei zur Ermittlung eines momentanen Helligkeitswertes (40) eines jeweiligen Pixels der generierten synthetischen Bilddaten (16) zumindest ein Helligkeitswert (40) aus abgespeicherten Helligkeitswerten (10) ausgelesen wird, wobei die abgespeicherten Helligkeitswerte (10) von einem Versatz eines periodischen Belichtungszeitraums (44) des jeweiligen Pixels gegenüber einem periodischen Helligkeits-Zeitverlauf (30) der flackernden Lichtquelle abhängen.

Die Anmeldung betrifft weiter einen Kamerasimulator (14), eine Prüfumgebung (28) für ein Steuersystem (20) eines Fahrzeuges, eine Verwendung von pixelspezifischen Helligkeitswerten (10) in einem Kamerasimulator (14) und ein Computerprogrammprodukt.

## Beschreibung

### Technisches Gebiet

Die Anmeldung betrifft ein Verfahren zur Kamerasimulation, einen Kamerasimulator sowie eine Prüfumgebung für ein Steuersystem eines Fahrzeuges. Die Anmeldung betrifft weiter eine Verwendung von pixelspezifischen Helligkeitswerten in einem Kamerasimulator und ein Computerprogrammprodukt.

### Hintergrund

Geräte zur Ausführung von Steuerungs- und/oder Regelungsaufgaben in Fahrzeugen werden auch als Steuergeräte bezeichnet. Steuergeräte in Fahrzeugen, insbesondere Kraftfahrzeugen, können eine Recheneinheit, Speicher, Schnittstellen und evtl. weitere Komponenten, aufweisen, die für die Verarbeitung von Eingangssignalen mit Eingangsdaten in das Steuergerät und die Erzeugung von Ausgangssignalen mit Ausgangsdaten erforderlich sind. Die Schnittstellen dienen zur Aufnahme der Eingangssignale bzw. Abgabe der Ausgangssignale.

Die Steuerungs- und Regelungsaufgaben können z. B. Fahrfunktionen betreffen und insbesondere als Software ausgeführt sein. Solche Fahrfunktionen können sowohl fortgeschrittene Fahrerassistenzsysteme (ADAS = Advanced Driver Assistance Systems) betreffen als auch für autonomes oder teilautonomes Fahren vorgesehen sein. Insbesondere für solche Fahrfunktionen können als Eingangsdaten Sensordaten von verschiedenen Sensoren, z. B. Kameras, empfangen werden.

Steuersysteme im Fahrzeug werden im Laufe des Entwicklungsprozesses getestet. Dabei erstrecken sich die Tests über den Entwicklungsprozess von ersten Softwareumfängen, die unabhängig von der Hardware des späteren Steuergerätes getestet werden, bis zum Steuergerät, welches Hardware und Software umfasst.

Eine Möglichkeit zum Test von Steuergeräten, die Sensordaten von Sensoren auswerten, besteht darin, die Steuergeräte mit den entsprechenden Sensoren im Einbauzustand - beispielsweise im Kraftfahrzeug im Rahmen von Testfahrten - zu erproben. Dies ist aufwendig, kostenintensiv und erst spät im Entwicklungsprozess möglich. Viele Situationen können auch in einer solchen echten Umgebung nicht überprüft werden, da sie nur in Extremfällen, beispielsweise bei Unfällen, auftreten.

Deshalb können Steuersysteme in verschiedenen Phasen ihrer Entwicklung in künstlichen Umgebungen, beispielsweise in Prüfumgebungen, getestet werden. Ein mögliches Testszenario besteht hier darin, die Funktionalität eines Steuergeräts mittels einer simulierten Umwelt in einer virtuellen Umgebung zu testen. Die Umgebungssimulation kann dabei die Simulation von realen Sensoren mittels einer Sensorsimulation umfassen. Die Sensorsimulation kann dabei synthetische Sensordaten generieren, die die virtuelle Umgebung des Steuergerätes nachbilden. Solche nachgebildeten Sensoren können insbesondere Kameras betreffen, welche synthetische Bilddaten generieren.

In dem Artikel "Simulation of Rolling Shutter Acquisition in Optical Camera Communications" von V. Matus, V. Guerra, C. Jurado-Verdu, J. Rabadan, and R. Perez-Jimenez, IDeTIC-ULPGC, PCT Tafira, 35017, Las Palmas de Gran Canaria, Spain wird ein Simulator für die optische Kamerakommunikation beschreiben. In der optischen Kamerakommunikation wird der Rolling-Shutter-Empfangsmechanismus genutzt, um Empfänger für die Kommunikation mit sichtbarem Licht herzustellen. In dem Artikel wird der Rolling-Shutter-Empfangsmechanismus für eine solche Kamera als Empfänger in der optischen Kamerakommunikation simuliert.

In dem Artikel "Invisible Perturbations: Physical Adversarial Examples Exploiting the Rolling Shutter Effect" von Athena Sayles, Ashish Hooda, Mohit Gupta, Rahul Chatterjee, Earlence Fernandes University of Wisconsin-Madison werden physische feindliche Angriffe auf kamerabasiertes Computer-Sehen beschrieben. Die Angriffe sind für das menschliche Auge unsichtbar. Hierfür wird das Licht modifiziert, das ein Objekt beleuchtet, und der Rolling-Shutter-Effekt der Kamera ausgenutzt. Der Artikel beschreibt auch eine Computersimulation des Rolling-Shutter-Effekts zur Planung eines Angriffs.

### Übersicht

Eine Kamerasimulation generiert synthetische Bilddaten, welche eine flackernde Lichtquelle wiedergeben. Bei einem Verfahren zu der Kamerasimulation wird zur Ermittlung eines momentanen Helligkeitswertes eines jeweiligen Pixels der generierten synthetischen Bilddaten zumindest ein Helligkeitswert aus abgespeicherten Helligkeitswerten ausgelesen. Die abgespeicherten Helligkeitswerte hängen von einem Versatz eines periodischen Belichtungszeitraums des jeweiligen Pixels gegenüber einem periodischen Helligkeits-Zeitverlauf der flackernden Lichtquelle ab.

Die Nutzung von zuvor abgespeicherten Werten zu Ermittlung der jeweiligen Helligkeiten der jeweiligen Pixel in den zu generierenden synthetischen Bilddaten bietet den Vorteil, dass die Helligkeit zur Laufzeit der Simulation nicht berechnet werden muss. Hierdurch können die synthetischen Bilddaten schneller und in Echtzeit generiert werden. Zugleich kann der Effekt der flackernden Lichtquelle und die Art der Verarbeitung der flackernden Lichtquelle in den synthetischen Bilddaten berücksichtigt werden. Hierdurch können die synthetischen Bilddaten physikalisch korrekt berechnet werden.

Flackernde Lichtquellen können auch als pulsierende Lichtquellen bezeichnet werden. Flackernde Lichtquellen sind z.B. PWM-gedimmte LEDs oder Leuchtstoffröhren. Z.B. Fahrscheinwerfer, Straßenlaternen und/oder Werbetafeln können auch oft mit gepulsten Lichtern ausgestattet sein. Die Frequenz, mit der die Lichtquellen gepulst sind, ist so hoch, dass sie für das menschliche Auge nicht wahrnehmbar sind. Sie erzeugen jedoch bei Aufnahmen durch Kameras Effekte, sogenannte Artefakte, welche auch in den simulierten synthetischen Bilddaten dargestellt werden sollen. Zu simulierende flackernde Lichtquellen können durch das Verfahren physikalisch korrekt und schnell, z. B. in Echtzeit, in den durch die Kamerasimulation generierten synthetischen Bilddaten dargestellt werden.

Aktive flackernde Lichtquellen sind z.B. gepulste Straßenlaternen. Passive flackernde Lichtquellen sind z.B. Verkehrsschilder, die von einer solchen Straßenlaterne ausgeleuchtet sind. Bei flackernden oder pulsierenden Lichtquellen ändert sich die Helligkeit der Lichtquelle über die Zeit. Wenn ein solches Flackern in ähnlichen Zeitmaßstäben abläuft wie die Belichtung bzw. die Bildrate einer Kamera, kann es zu Artefakten in der Aufnahme führen. Das kann z.B. eine Schwebung sein, die sich in der Filmaufnahme als langsames, deutlich sichtbares Blinken zeigt, oder eine inhomogene Helligkeit der Lichtquelle bedingt durch das Aufnahmeverfahren der Kamera.

Es ist von Vorteil, wenn in synthetischen Bilddaten in einer Prüfumgebung für ein kamerabasiertes Steuersystem diese Artefakte auch enthalten sind, damit die durch die Prüfumgebung zur Verfügung gestellte Umgebung für das Steuersystem möglichst realitätsnah ist.

Für eine korrekte Ermittlung der Helligkeit kann eine Zeitintegration des Helligkeitsverlaufs der Lichtquelle über die Belichtungszeit der Kamera durchgeführt werden. Dies ist rechenaufwändig und zeitkritisch für Echtzeitsimulationen. Es wird daher vorgeschlagen, für eine korrekte Simulation unter Echtzeitbedingungen die Berechnung der Zeitintegration des Helligkeitsverlaufs der Lichtquelle über die Belichtungszeit der Kamera vorab durchzuführen und abzuspeichern.

Der Helligkeits-Zeitverlauf der flackernden Lichtquelle und der Belichtungszeitraum des jeweiligen Pixels sind periodisch. Der Helligkeitswert für einen jeweiligen Pixel wird in Abhängigkeit von einem Versatz des Belichtungszeitraumes gegenüber dem Helligkeits-Zeitverlauf ermittelt.

Konkret wird die Belichtung eines Kamerapixels durch die flackernde Lichtquelle also für eine Vielzahl von Versätzen des periodischen Belichtungszeitraums des jeweiligen Pixels gegenüber dem periodischen Helligkeits-Zeitverlauf der flackernden Lichtquelle vorberechnet und abgespeichert. Der Versatz kann z. B. von dem Startzeitpunkten der Belichtung des jeweiligen Pixels im Helligkeitsverlauf der Lichtquelle abhängen. Die Kamerasimulation liest dann zur Laufzeit der Simulation zumindest einen passenden Wert aus und verwendet diesen zur Ermittlung der Helligkeit für den jeweiligen Pixel in den synthetischen Bilddaten.

In einer Ausführungsform des Verfahrens umfassen die abgespeicherten Helligkeitswerte eine Zuordnung von jeweiligen Versätzen zu jeweiligen Helligkeitswerten. Die abgespeicherten Helligkeitswerte können dabei insbesondere als Tabelle über die zugeordneten Versätze abgespeichert sein. Die Anzahl der gespeicherten Versätze und deren Schrittweite kann z. B. von den Gegebenheiten der simulierten Kamera, der Periodenlänge von Lichtquelle und/oder Belichtungszeitraum und/oder von Gegebenheiten der Simulation, z. B. Taktzeiten, abhängen.

In einer Ausführungsform des Verfahrens werden die abgespeicherten Helligkeitswerte vor der eigentlichen Kamerasimulation gemäß dem folgenden Verfahren ermittelt:
- Wiederholtes Ermitteln eines Helligkeitswertes für einen jeweiligen Pixel der synthetischen Bilddaten für den jeweiligen Versatz des periodischen Belichtungszeitraums des jeweiligen Pixels gegenüber dem periodischen Helligkeits-Zeitverlauf der flackernden Lichtquelle,
- Speichern des jeweiligen ermittelten Helligkeitswertes zugeordnet zu dem jeweiligen Versatz.

Die Integration des Helligkeits-Zeitverlaufes der Lichtquelle über die jeweilige Belichtungszeit eines jeweiligen Pixels mit dem jeweiligen Versatz erfolgt also während dieses Verfahrens, welches vor der eigentlichen Kamerasimulation abläuft. Hierdurch kann die eigentliche Kamerasimulation schneller ablaufen, da die abgespeicherten Helligkeitswerte ausgelesen und verwendet werden können.

In einer Ausführungsform des Verfahrens werden die Helligkeitswerte in den abgespeicherten Helligkeitswerten für den jeweiligen Pixel in Abhängigkeit von zumindest einem weiteren Parameter der durch die Kamerasimulation simulierten Kamera ermittelt, wobei der zumindest eine weitere Parameter eine Blendenweite und/oder eine Quanteneffizienz und/oder eine Belichtungszeit umfasst. Mit der Quanteneffizienz wird der Wirkungsgrad des bildgebenden Sensors der Kamera charakterisiert.

In einer Ausführungsform des Verfahrens wird bei der Ermittlung des momentanen Helligkeitswerts des jeweiligen Pixels der Versatz des Belichtungszeitraumes gegenüber dem Helligkeits-Zeitverlauf unter Verwendung der Simulationszeit und der Periode des Helligkeits-Zeitverlaufs ermittelt.

In einer Ausführungsform des Verfahrens wird der momentane Helligkeitswert des jeweiligen Pixels in den synthetischen Bilddaten unter Verwendung von einem oder von zwei der abgespeicherten Helligkeitswerte ermittelt, wobei insbesondere eine Interpolation von zwei nächstliegenden Helligkeitswerten erfolgt. In dieser Ausführungsform kann die Qualität des momentanen Helligkeitswertes noch verbessert werden, indem zwischen zwei benachbarten Helligkeitswerten interpoliert wird. So können nicht nur Helligkeitswerte generiert werden, die einem der abgespeicherten Versätze entsprechen, sondern auch Helligkeitswerte, die dazwischen liegen.

Die Kamerasimulation liest zur Laufzeit der Simulation die zwei zum aktuellen Zeitpunkt passenden Werte aus und interpoliert sie. Zum aktuellen Zeitpunkt passende Werte sind dabei diejenigen Werte, deren zugeordnete Versätze neben dem aktuellen Versatz des jeweiligen aktuellen Pixels liegen. Zur Ermittlung des momentanen Helligkeitswertes des aktuellen Pixels kann der aus dem aus dem interpolierten Wert ermittelte Helligkeitswert noch unter Berücksichtigung von aktuellen Gegebenheiten der Kamera skaliert werden.

Ein Kamerasimulator ist eingerichtet eine Kamera zu simulieren und synthetische Bilddaten der simulierten Kamera zu generieren. Die Bilddaten können eine flackernde Lichtquelle wiedergeben. Der Kamerasimulator ist eingerichtet, zur Ermittlung eines momentanen Helligkeitswertes für einen jeweiligen Pixel der generierten synthetischen Bilddaten zumindest einen Helligkeitswert aus abgespeicherten Helligkeitswerten auszulesen, wobei die abgespeicherten Helligkeitswerte von einem Versatz eines periodischen Belichtungszeitraums des jeweiligen Pixels gegenüber einem periodischen Helligkeits-Zeitverlauf der flackernden Lichtquelle abhängen.

Durch die Verwendung der vorab berechneten und abgespeicherten Helligkeitswerte kann der Kamerasimulator die flackernde Lichtquelle in den simulierten Bilddaten korrekt darstellen. Zugleich ist der Ablauf in Echtzeit möglich, da die Berechnung selbst nicht zur Laufzeit stattfinden muss, sondern vorab erfolgt ist.

In einer Ausführungsform des Kamerasimulators ist der Helligkeits-Zeitverlauf der flackernden Lichtquelle als erste Nachschlagetabelle gespeichert und die abgespeicherten Helligkeitswerte sind als zweite Nachschlagetabelle in dem Kamerasimulator gespeichert. Die Helligkeitswerte werden vor Simulationsstart anhand des zeitlichen Helligkeitsverlaufs der Lichtquelle generiert und während der Simulation zur Simulation der Kamera verwendet. Nachschlagetabellen können als sogenannte Look-Up-Table (LUT) realisiert werden. Auf Look-Up-Table kann durch die Software, die die Kamerasimulation ausführt, zur Laufzeit effizient zugegriffen werden. Die Anzahl der abgespeicherten Helligkeitswerte kann zum Beispiel gleich groß gewählt werden wie die Anzahl der zu der Lichtquelle abgespeicherten Werte des Helligkeits-Zeitverlaufes.

In einer Ausführungsform des Kamerasimulators ist die simulierte Kamera eine Rolling-Shutter-Kamera. Der Belichtungszeitraum der jeweiligen Pixel kann dabei insbesondere die Pixel einer Zeile oder die Pixel einer Spalte betreffen. Eine Rolling-Shutter-Kamera ist eine digitale Kamera auf, z. B. mit CMOS-Sensoren als Pixel. Bei einer Rolling-Shutter-Kamera wird das Bild nicht auf einmal, sondern abschnittsweise, z. B. zeilenweise oder spaltenweise, aufgenommen. Entsprechend können unterschiedliche Pixel zu unterschiedlichen Zeitpunkten erfasst werden. Bei flackernden Lichtquellen führt dies aufgrund von verschobenen Belichtungszeiträumen der Pixel zu unterschiedlichen Helligkeiten der Pixel in den Bilddaten. Dieses Artefakt kann auch als Rolling-Shutter-Effekt bezeichnet werden.

In einer Ausführungsform ist der Kamerasimulator eingerichtet, Objektdaten zu einem Objekt von einer virtuellen Umgebung der simulierten Kamera zu empfangen und in den generierten synthetischen Sensordaten abzubilden. Dies kann z. B. genutzt werden ein Steuersystem in einer virtuellen Umgebung zu testen.

Eine Prüfumgebung für ein Steuersystem eines Fahrzeuges umfasst eine virtuelle Umgebung des Steuersystems und/oder Fahrzeuges und den beschriebenen Kamerasimulator.

Die durch die flackernde Lichtquelle auftretenden Artefakte in realen Bilddaten können durch den Kamerasimulator auch in den synthetischen Bilddaten dargestellt werden. Aufgrund der Nutzung von vorberechneten gespeicherten Helligkeitswerten, ist die Generierung der entsprechenden synthetischen Bilddaten in Bezug auf diese Artefakte nicht nur präzise, sondern auch schnell und echtzeitfähig. Es ist von Vorteil, dass in einer Prüfumgebung für ein kamerabasiertes Steuersystem diese Artefakte auch dargestellt werden können, da dadurch die durch die Prüfumgebung zur Verfügung gestellte Umgebung für das Steuersystem realitätsnah ist.

Eine solche Prüfumgebung kann auch als Test- oder Trainingsumgebung bezeichnet werden. Neben dem Test des Steuersystems kann das Steuersystem in der Prüfumgebung auch trainiert werden, was z. B. bei lernenden Steuersystemen von Vorteil ist. So kann z. B. getestet werden, ob das Steuersystem diese Artefakte in den Bilddaten im Feld korrekt interpretieren und verwerten kann.

Pixelspezifische Helligkeitswerte können in einem Kamerasimulator zur Generierung von synthetischen Bilddaten, welche eine flackernde Lichtquelle wiedergeben, verwendet werden. Solche pixelspezifischen Helligkeitswerte können insbesondere als Daten, z. B. als Nachschlagetabelle, auf einem maschinenlesbaren Speichermedium abgespeichert sein.

Die Helligkeitswerte werden gemäß dem folgenden Verfahren ermittelt:
- Wiederholtes Ermitteln eines Helligkeitswertes für einen jeweiligen Pixel der synthetischen Bilddaten für einen jeweiligen Versatz des periodischen Belichtungszeitraums des jeweiligen Pixels gegenüber einem periodischen Helligkeits-Zeitverlauf der flackernden Lichtquelle,
- Speichern des jeweiligen ermittelten Helligkeitswertes zugeordnet zu dem jeweiligen Versatz.

Ein Computerprogrammprodukt umfasst ein Computerprogramm mit Befehlen, die bei der Ausführung durch einen Computer diesen veranlassen, die Schritte des beschriebenen Verfahrens zur Kamerasimulation auszuführen.

Ein weiteres Computerprogrammprodukt umfasst ein weiteres Computerprogramm mit Befehlen, die bei der Ausführung durch einen Computer diesen veranlassen, die Schritte des beschriebenen Verfahrens zur Ermittlung der Helligkeitswerte auszuführen.

### Figurenliste

Ausführungsbeispiele der Erfindung sind in der Zeichnung dargestellt und werden in der nachfolgenden Beschreibung näher erläutert.

Es zeigen
- **Figur 1**: schematisch ein Verfahren zum Ermitteln von pixelspezifischen Helligkeitswerten,
- **Figur 2**: schematisch eine Prüfumgebung für ein Steuersystem,
- **Figur 3**: beispielhafte Helligkeits-Zeitverläufe von zwei flackernden Lichtquellen,
- **Figur 4**: beispielhaft den Helligkeits-Zeitverlauf einer Lichtquelle und die Helligkeit eines die Lichtquelle erfassenden Pixels,
- **Figur 5**: schematisch eine beispielhafte 1D-Textur von gespeicherten Helligkeitswerten,
- **Figur 6**: schematisch die Korrektur einer Linsenverzeichnung.

Es werden in den Figuren die gleichen Bezugszeichen für gleiche oder ähnliche Elemente verwendet. Die Darstellungen in den Figuren können nicht maßstäblich sein.

### Figurenbeschreibung

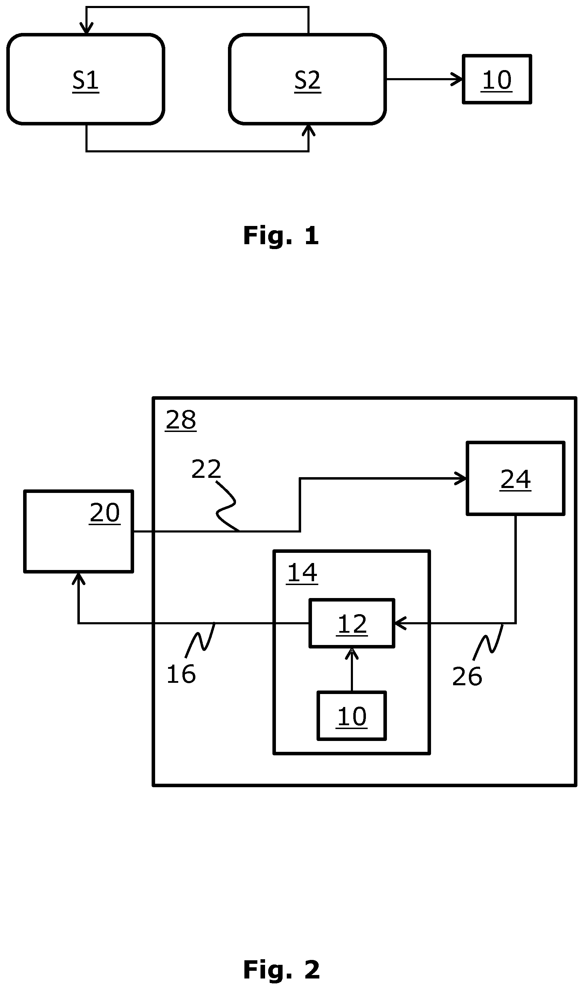

In Figur 1 ist schematisch ein Verfahren zum Ermitteln von pixelspezifischen Helligkeitswerten 40 für einen Kamerasimulator 14 dargestellt. Der Kamerasimulator 14 generiert synthetische Bilddaten 16, welche eine flackernde Lichtquelle wiedergeben.

Das Verfahren weist auf:
S1: Ermitteln eines Helligkeitswertes 40 für einen jeweiligen Pixel der synthetischen Bilddaten 16 in Abhängigkeit von einem Helligkeits-Zeitverlauf 30 der flackernden Lichtquelle und von einem Belichtungszeitraum 44 des jeweiligen Pixels,
S2: Speichern des ermittelten Helligkeitswertes 40 auf einem computerlesbaren Medium.

Die Schritte S1, S2 werden für weitere Startzeitpunkte des Belichtungszeitraumes 44 wiederholt. Die gespeicherten Helligkeitswerte 10 sind dann auf dem computerlesbaren Medium gespeichert.

Der Helligkeits-Zeitverlauf 30 der flackernden Lichtquelle kann als erste Nachschlagetabelle vorliegen und die ermittelten Helligkeitswerte 10 können als zweite Nachschlagetabelle auf dem computerlesbaren Medium gespeichert werden.

Der Helligkeits-Zeitverlauf 30 der flackernden Lichtquelle und der Belichtungszeitraum 44 des jeweiligen Pixels sind insbesondere periodisch, wobei der Helligkeitswert 40 für einen jeweiligen Pixel in Abhängigkeit von einem zeitlichen Versatz des Belichtungszeitraumes 44 gegenüber dem Helligkeits-Zeitverlauf 30 ermittelt wird. Der Versatz kann sich dabei insbesondere darauf beziehen, um wieviel Zeit der Anfangszeitpunkt der Periode 42 des Helligkeits-Zeitverlaufs 30 der Lichtquelle gegenüber dem Anfangszeitpunkt der Periode des Belichtungszeitraumes 44 des jeweiligen Pixels versetzt ist.

Die so ermittelten und gespeicherten Helligkeitswerte 10 können als Parameter bei der Generierung der synthetischen Bilddaten 16 verwendet werden. So kann das korrekte zeitliche Verhalten der Kamera und der Lichtquelle für die Simulation zur Verfügung gestellt werden. Hierdurch lassen sich z. B. Global-Shutter-Kameras und Rolling-Shutter-Kameras und die zugehörigen Artefakte korrekt und in Echtzeit simulieren.

Figur 2 zeigt schematisch in vereinfachter Darstellung ein Beispiel einer Prüfumgebung 28 für ein Steuersystem 20 für ein Fahrzeug. Die Prüfumgebung 28 weist eine virtuelle Umgebung 24 des Steuersystems 20 und/oder des Fahrzeugs auf. In der virtuellen Umgebung 24 wird für das Steuersystem 20 und/oder das Fahrzeug die Umgebung simuliert, in der es sich in der Simulation zum Testen oder Trainieren bewegt. Das Steuersystem 20 und/oder das Fahrzeug kann mit der virtuellen Umgebung 24 auch interagieren.

Die Prüfumgebung 28 weist einen Kamerasimulator 14 auf, der synthetische Bilddaten 16 generiert. Der Kamerasimulator 14 kann z. B. einen Prozessor, Speicher und Schnittstellen aufweisen und ein Verfahren zur Kamerasimulation ausführen. Zur Generierung der synthetischen Bilddaten 16 zur Kamerasimulation weist der Kamerasimulator 14 einen Bilddaten-Generator 12 und einen Speicher mit den gespeicherten Helligkeitswerten 10 auf. Die gespeicherten Helligkeitswerte 10 wurden gemäß dem in Bezug auf Figur 1 beschriebenen Verfahren erzeugt und abgespeichert. Beim Generieren der synthetischen Bilddaten 16 greift der Bilddaten-Generator 12 auf die gespeicherten Helligkeitswerte 10 zu und liest sie aus.

Der Bilddaten-Generator 12 kann Objektdaten 26 von der virtuellen Umgebung 24 empfangen. Die Objektdaten 26 beziehen sich auf ein Objekt oder mehrere Objekte, die in der virtuellen Umgebung 24 vorkommen. Mittels der Objektdaten 26 kann der Kamerasimulator 14 Objekte in den synthetischen Bilddaten 16 darstellen.

Über die synthetischen Bilddaten 16 kann das Steuersystem 20 seine Umgebung erfassen und darauf z. B. in seinen Ausgabedaten 22 reagieren. Die Ausgabedaten 22 können z. B. an die virtuelle Umgebung 24, wie in Figur 2 dargestellt, übermittelt werden. Falls die Prüfumgebung weitere Komponenten umfasst, können auch diese ggf. Empfänger der Ausgabedaten 22 sein. Auf die Ausgabedaten 22 kann wiederum in der virtuellen Umgebung 24 reagiert werden.

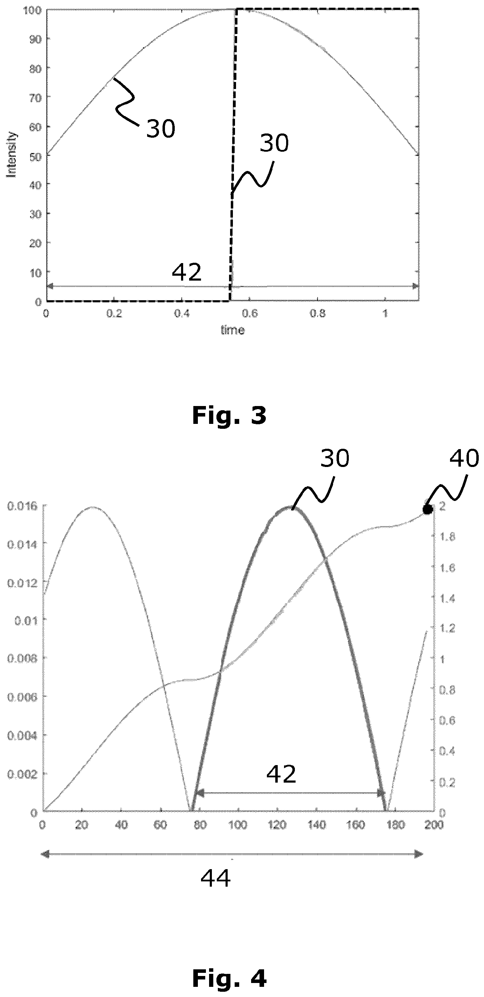

In Figur 3 sind zwei Beispiele von Helligkeits-Zeitverläufen 30 von zwei flackernden Lichtquellen dargestellt. Die Helligkeits-Zeitverläufe 30 ändern sich periodisch.

Zur Verarbeitung solcher Zeitverläufe in auf Computern oder Prozessoren können diese Lichter durch Nachschlagetabellen, sogenannte Look-up-Tabellen (LUT) definiert werden und in solchen gespeichert werden. Eine solche Nachschlagetabelle beinhaltet diskrete Intensitätswerte der Lichtquelle über eine Periode 42 hinweg.

In Figur 3 ist ein Beispiel einer pulsweitenmodulierten LED dargestellt, bei der der Zeitverlauf 30 z.B. den Wechsel zwischen eingeschaltetem und ausgeschaltetem Zustand dargestellt (idealisierte PWM). Es ist weiter beispielhaft eine fluoreszierende Lampe, z.B. Leuchtstofflampe, mit einem kontinuierlichen Helligkeits-Zeitverlauf 30 dargestellt. Hier ist der Verlauf 30 z.B. bedingt durch eine Netzfrequenz von 50 Hz. In einer Nachschlagetabelle können beliebige Verläufe von flackernden Lichtquellen abgelegt und definiert werden.

In Figur 4 ist beispielhaft der periodische Helligkeits-Zeitverlauf 30 einer Lichtquelle mit der Periode 42 und die Helligkeit eines die Lichtquelle erfassenden Pixels über eine Periode seines Belichtungszeitraumes 44 dargestellt.

Wird die Integrationszeit der Pixel der Kamera über den Belichtungszeitraum 44 berücksichtigt, ergibt sich beispielsweise der in Figur 4 gezeichnete Verlauf. Die ansteigende Kurve ist jeweils die Summe bzw. das Integral über die einzelnen abgespeicherten Intensitäten der Lichtquelle und ist somit proportional zu der Anzahl der durch den Pixel detektierten Photonen und führt am Ende der Belichtungszeitraumes 44 zum Helligkeitswert 40 des Pixels.

Die durchschnittliche Helligkeit der Lichtquelle ist durch das Integral über dem Helligkeits-Zeitverlauf 30 während einer Periode 42 geteilt durch die Periodenzeit gegeben. Der tatsächliche momentane Helligkeitswert 40 des jeweiligen Pixels der Kamera lässt sich entsprechend aus der Integration über den Helligkeits-Zeitverlauf 30 während der Belichtungszeit 44 berechnen. Solche Helligkeitswerte 40 lassen sich gemäß des in Bezug auf Figur 1 beschriebenen Verfahrens für verschiedene Versätze von Helligkeits-Zeitverlauf 30 und Belichtungszeitraum 44 berechnen und als gespeicherte Helligkeitswerte 10 abspeichern.

Das Verhältnis des Helligkeitswertes 40 zu der erwähnten durchschnittlichen Helligkeit der Lichtquelle ist der Prozentsatz, mit dem die mittlere Beleuchtung des darzustellenden Pixels beim Generieren der synthetischen Bilddaten 16 (Rendering) durch den Kamerasimulator 14 dann angepasst wird.

In Abhängigkeit von dem Zeitpunkt, wann das Kamerabild aufgenommen werden soll, verschiebt sich der Helligkeits-Zeitverlauf 30 gegenüber dem Belichtungszeitraum 44. Die Bildwiederholrate der Kamera und die Pulsfrequenz des Lichts müssen nicht gleich sein und können sich deshalb mit unterschiedlichen Versätzen gegeneinander verschoben sein. Dies kann durch die Ermittlung von Helligkeitswerten 40 für unterschiedliche Versätze berücksichtigt werden.

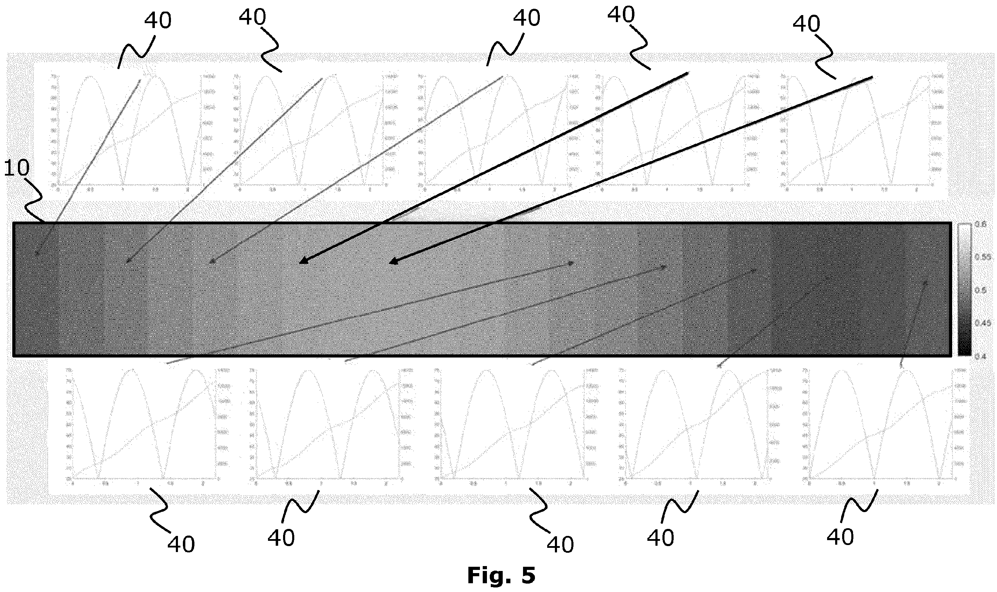

In Figur 5 ist beispielhaft dargestellt, wie die gespeicherten Helligkeitswerte 10 in Form einer 1D-Textur gespeichert werden können.

Bereits vor der Simulation durch den Kamerasimulator 14 können basierend auf dem Helligkeits-Zeitverlauf 30 und einer Integrationszeit der Kamera (Belichtungszeitraum 44) die Helligkeitswerte 40 unter Berücksichtigung diskreter Versätze vorberechnet werden.

Die Schrittweite der Versätze kann dabei z.B. von der Anzahl der Einträge in der Nachschlagtabelle des Helligkeits-Zeitverlaufes 30 abhängen oder dieser entsprechen.

Zusätzlich können diese vorberechneten Helligkeitswerte 40 bzw. davon abhängige Werte (z.B. das Verhältnis des Helligkeitswertes 40 zu der erwähnten durchschnittlichen Helligkeit der Lichtquelle) abhängig vom Versatz in einer 1D-Textur wie in Figur 5 dargestellt gespeichert werden.

Jeder Eintrag in der Textur kann somit dem Verhältnis des Helligkeitswertes 40 zu der erwähnten durchschnittlichen Helligkeit der Lichtquelle zu einem diskreten Versatz (Offsetwert) entsprechen.

Während der Simulation der Kamera durch den Kamerasimulator 14 ermöglicht das bei der Generierung der synthetischen Bilddaten 16 eine schnelle lineare Interpolation der Helligkeitswerte 40 zwischen den verschiedenen Versatzwerten. Dies erfolgt bei der Generation der synthetischen Bilddaten 16 durch den Bilddaten-Generator 12, welcher zum Zweck der Generierung der synthetischen Bilddaten z. B. einen Graphikprozessor (GPU) aufweisen kann. Die schnelle lineare Interpolation der Helligkeitswerte 40 zwischen den verschiedenen Versatzwerten kann z. B. direkt auf der GPU des Bilddaten-Generators 12 durch Interpolation in Hardware erfolgen.

Beispiel für eine simulierte Global-Shutter-Kamera:
- Manöverzeit 0.95 Sekunden (Zeitpunkt zu dem das Kamerabild aufgenommen wird)
- Pulsfrequenz: 50 Hz → Periodendauer: 0.02 s
- Versatz: mod(0.95,0.02) = 0.01s
   Der Versatz ist also 50% der Periode 42, d.h. aus der 1D-Textur muss der mittlere Wert ausgelesen werden.
- Für die Global-Shutter-Kamera kann nun diese Lichtquelle mit diesem Wert simuliert (gerendert) werden (z.B. 1.015-fach so hell, wie die durchschnittliche Helligkeit der Lichtquelle).

Beispiel für eine simulierte Rolling-Shutter-Kamera:
- Der Belichtungszeitraum 44 ist die Zeit, die zur Belichtung einer Zeile von Pixeln benötigt wird.
- Manöverzeit 0.95 Sekunden (Zeitpunkt zu dem die Aufnahme des Kamerabilds startet)
- Pulsfrequenz: 50 Hz →Periodendauer: 0.02 s
- Damit berechnet sich der Offset: mod(0.95,0.02) = 0.01s
- Zusätzlich wird ein zeilenweiser Offset hinzugerechnet (Zeilenanzahl*Belichtungszeitraum 44)
- Für die Lichtquelle wird dann für jede Zeile von Pixeln ein Wert aus der Textur ausgelesen und/oder aus zwei benachbarten interpoliert und zum Skalieren der durchschnittlichen Helligkeit verwendet werden.

Das Verfahren kann sowohl für die Simulation von Rolling-Shutter-Kameras als auch für die Simulation von Global-Shutter-Kameras verwendet werden. Die Auflösung der Textur (Schrittweite der Versätze) kann entsprechend angepasst werden. Beim Rolling-Shutter kann diese (je nach Lichtquelle) feiner gewählt werden, da der Belichtungszeitraum 44 kürzer ist. Liegt die Periodendauer der Periode 42 des pulsierenden Lichts in der Größenordnung des Belichtungszeitraums 44 des Rolling-Shutters für eine Zeile von Pixeln, kann bevorzugt eine entsprechend feine Textur mit kleiner Schrittweite vorberechnet werden.

Die Helligkeit von Bildern echter Kameras wird durch Kameraparameter beeinflusst, die z.B. Blendenzahl, Belichtungszeit der Aufnahme und Quanteneffizienz (Verstärkungsfaktor, Gain) des Image-Sensors umfassen. Der Verstärkungsfaktor wird häufig durch einen ISO-Wert angegeben.

Beim Generieren der synthetischen Bilddaten 16 (dem Rendering) wird dies, wie im Folgenden mathematisch, beschrieben berücksichtigt:
Es wird ein Exposure Value EV eingeführt: $EV = {log}_{2} \frac{{N}^{2}}{t} - {log}_{2} \frac{ISO}{100} = {log}_{2} \left(\frac{{N}^{2}}{t}\frac{100}{ISO}\right)$ mit N als Blendenzahl, t der Belichtungszeit der Aufnahme und ISO dem Verstärkungsfaktor. Diese drei Größen beeinflussen somit die Helligkeit des aufgenommenen Bildes. Beim Generieren der synthetischen Bilddaten 16 in dem Bilddaten-Generator 12 werden diese Kamerawerte invers berücksichtigt. Wird z.B. die Belichtungszeit einer echten Kamera verkürzt, muss ein dunkleres Bild generiert werden.

Daher kann die sogenannte Exposure E eingeführt werden: $E = \frac{1}{{2}^{EV - EC}}$

Hierbei ist EV der Exposure Value und EC ein Kompensationsfaktor.

Die Helligkeit B eines zu generierenden Pixels bestimmt sich dann durch B=ExL, wobei B die Helligkeit des Pixels ist, E die Exposure und L die Oberflächenluminanz (in cd/m²) einer darzustellenden Oberfläche ist.

Zusammen ergibt sich: $E = \frac{1}{{2}^{\left({log}_{2}\left(\frac{{N}^{2} 100}{t ISO}\right)-EC\right)}} = \frac{{2}^{EC}}{\frac{{N}^{2}}{t} \frac{100}{ISO}} = \frac{{2}^{EC}}{{N}^{2} ⋅ \frac{100}{ISO}} ⋅ t$

Bei der Generierung der synthetischen Bilddaten 16 wird der Faktor E entsprechend dem beschriebenen Verfahren mit der aus den gespeicherten Helligkeitswerten 10 ausgelesenen, optional interpolierten, Werten multipliziert, sodass die Helligkeit B des aktuellen darzustellenden Pixels entsprechend skaliert wird.

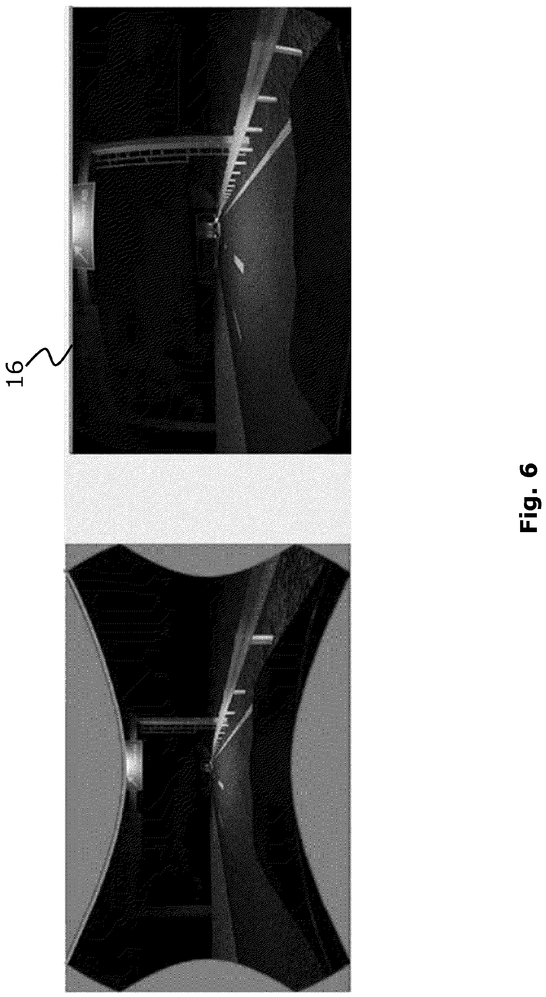

In Figur 6 ist schematisch die Korrektur einer Linsenverzeichnung bei der Generierung der synthetischen Bilddaten 16 (Rendering) durch den Bilddaten-Generator 12 dargestellt.

Bei der Berechnung von verzerrten Bildern wird die Verzerrung auch bei der Berechnung der der Helligkeitswerte 40 berücksichtigt. Für die Berechnung von verzerrten Bildern wird technisch zunächst ein nicht-verzerrtes Bild berechnet und das Bild anschließend anhand der Verzeichnung verzerrt. In einer echten Kamera trifft direkt das verzerrte Bild auf den Bildsensor. Daher werden für die Berechnung des Versatzes nicht die nicht-verzerrten Positionen, sondern die Position des Pixels nach der Verzeichnung genutzt.

Aus Figur 6 wird ersichtlich, dass die Pixel mit gleichem Offset nicht auf einer Horizontalen liegen (linkes Bild). Im verzerrten Bild hingegen sind z. B. die Pixel des oberen Bildrandes alle auf einer horizontalen Linie und werden gleichzeitig belichtet. Sie unterliegen bei einem zeilenweisen Rolling-Shutter also dem gleichen Versatz.

Ist die Verzeichnung zur Simulationszeit fix und ändert sich nicht, kann diese Textur ebenfalls vorberechnet werden.

In unserer Erfindung hingegen, wird das Timing jeder Lichtquelle (und emissiver oder retroreflektierenden Flächen) berücksichtigt und erst in der Kamerasimulation zusammengefügt. Dadurch wird ein physikalisch korrektes Verhalten erreicht.

### Bezugszeichenliste

- 10: gespeicherte Helligkeitswerte
- 12: Bilddaten-Generator
- 14: Kamerasimulator
- 16: synthetische Bilddaten
- 20: Steuersystem
- 22: Ausgabedaten Steuersystem
- 24: virtuelle Umgebung
- 26: Objektdaten
- 28: Prüfumgebung
- 30: Helligkeits-Zeitverlauf
- 40: Helligkeitswert
- 42: Periode Lichtquelle
- 44: Belichtungszeitraum
- S1: Ermitteln Helligkeitswerte
- S2: Speichern Helligkeitswerte

## Patentansprüche

1. Verfahren zur Kamerasimulation, welches synthetische Bilddaten (16) generiert, welche eine flackernde Lichtquelle wiedergeben, wobei zur Ermittlung eines momentanen Helligkeitswertes (40) eines jeweiligen Pixels der generierten synthetischen Bilddaten (16) zumindest ein Helligkeitswert (40) aus abgespeicherten Helligkeitswerten (10) ausgelesen wird, wobei die abgespeicherten Helligkeitswerte (10) von einem Versatz eines periodischen Belichtungszeitraums (44) des jeweiligen Pixels gegenüber einem periodischen Helligkeits-Zeitverlauf (30) der flackernden Lichtquelle abhängen.

2. Verfahren nach Anspruch 1, wobei die abgespeicherten Helligkeitswerte (10) eine Zuordnung von jeweiligen Versätzen zu jeweiligen Helligkeitswerten (40) umfassen.

3. Verfahren nach Anspruch 2, wobei in den abgespeicherten Helligkeitswerten (10) die Zuordnung von jeweiligen Versätzen zu jeweiligen Helligkeitswerten (40) in Form einer 1D-Textur abgespeichert ist.

4. Verfahren nach einem der vorhergehenden Ansprüche, wobei die abgespeicherten Helligkeitswerte (10) gemäß dem folgenden Verfahren ermittelt wurden:
• Wiederholtes Ermitteln eines Helligkeitswertes (40) für einen jeweiligen Pixel der synthetischen Bilddaten (16) für den jeweiligen Versatz des periodischen Belichtungszeitraums (44) des jeweiligen Pixels gegenüber dem periodischen Helligkeits-Zeitverlauf (30) der flackernden Lichtquelle,
• Speichern des jeweiligen ermittelten Helligkeitswertes (40) zugeordnet zu dem jeweiligen Versatz.

5. Verfahren nach Anspruch 4, wobei die Helligkeitswerte (40) in den abgespeicherten Helligkeitswerten (40) für den jeweiligen Pixel in Abhängigkeit von zumindest einem weiteren Parameter der durch die Kamerasimulation simulierten Kamera ermittelt werden, wobei der zumindest eine weitere Parameter eine Blendenweite und/oder eine Quanteneffizienz umfasst.

6. Verfahren nach einem der vorhergehenden Ansprüche, wobei der Abstand der Versätze in den gespeicherten Helligkeitswerten (10) von dem Verhältnis der Periodendauer des Belichtungszeitraumes (44) zu dem Helligkeits-Zeitverlauf (30) abhängt.

7. Verfahren nach einem der vorhergehenden Ansprüche, wobei bei der Ermittlung des momentanen Helligkeitswertes (10) des jeweiligen Pixels der Versatz des Belichtungszeitraumes (44) gegenüber dem Helligkeits-Zeitverlauf (30) unter Verwendung der Simulationszeit und der Periode des Helligkeits-Zeitverlaufs (30) ermittelt wird.

8. Verfahren nach einem der vorhergehenden Ansprüche, wobei der momentane Helligkeitswert (40) des jeweiligen Pixels in den synthetischen Bilddaten (16) unter Verwendung von einem oder von zwei der abgespeicherten Helligkeitswerte (10) ermittelt wird, wobei insbesondere eine Interpolation von zwei nächstliegenden Helligkeitswerten erfolgt.

9. Kamerasimulator (14) welcher eingerichtet ist, synthetische Bilddaten (16) einer simulierten Kamera zu generieren, welche eine flackernde Lichtquelle wiedergeben, wobei der Kamerasimulator (14) eingerichtet ist, zur Ermittlung eines momentanen Helligkeitswertes (40) für einen jeweiligen Pixel der generierten synthetischen Bilddaten (16) zumindest einen Helligkeitswert (40) aus abgespeicherten Helligkeitswerten (10) auszulesen, wobei die abgespeicherten Helligkeitswerte (10) von einem Versatz eines periodischen Belichtungszeitraums (44) des jeweiligen Pixels gegenüber einem periodischen Helligkeits-Zeitverlauf (30) der flackernden Lichtquelle abhängen.

10. Kamerasimulator nach Anspruch 9, wobei der Helligkeits-Zeitverlauf (30) der flackernden Lichtquelle als erste Nachschlagetabelle vorliegt und die abgespeicherten Helligkeitswerte (10) als zweite Nachschlagetabelle gespeichert sind.

11. Kamerasimulator nach Anspruch 9 oder 10, wobei die simulierte Kamera eine Rolling-Shutter-Kamera ist und der Belichtungszeitraum der jeweiligen Pixel insbesondere die Pixel einer Zeile oder die Pixel einer Spalte betrifft.

12. Kamerasimulator nach einem der Ansprüche 9 bis 11, wobei der Kamerasimulator (14) eingerichtet ist, Objektdaten (26) zu einem Objekt von einer virtuellen Umgebung (24) der simulierten Kamera zu empfangen und in den generierten synthetischen Sensordaten (16) abzubilden.

13. Prüfumgebung (28) für ein Steuersystem (20) eines Fahrzeuges, wobei die Prüfumgebung eine virtuelle Umgebung (24) des Fahrzeuges und einen Kamerasimulator (14) nach einem der Ansprüche 10 bis 12 aufweist.

14. Verwendung von pixelspezifischen Helligkeitswerten (10) in einem Kamerasimulator (14) zur Generierung von synthetischen Bilddaten (16), welche eine flackernde Lichtquelle wiedergeben, wobei die Helligkeitswerte (10) gemäß dem folgenden Verfahren ermittelt wurden:
• Wiederholtes Ermitteln eines Helligkeitswertes (40) für einen jeweiligen Pixel der synthetischen Bilddaten (16) für einen jeweiligen Versatz des periodischen Belichtungszeitraums (44) des jeweiligen Pixels gegenüber einem periodischen Helligkeits-Zeitverlauf (30) der flackernden Lichtquelle,
• Speichern des jeweiligen ermittelten Helligkeitswertes (40) zugeordnet zu dem jeweiligen Versatz.

15. Computerprogrammprodukt, umfassend ein Computerprogramm mit Befehlen, die bei der Ausführung durch einen Computer diesen veranlassen, die Schritte des Verfahrens nach einem der Ansprüche 1 bis 8 auszuführen.
